# EUROPEAN PATENT APPLICATION

(11) **EP 3 595 252 A1**
(43) Date of publication of application: **15.01.2020**
(21) Application number: 17900071.6
(22) Date of filing: 10.03.2017
(51) Int. Cl.: H04L 27/26, H04B 1/713, H04J 13/18

(54) **USER TERMINAL AND WIRELESS COMMUNICATION METHOD**

(71) Applicant: NTT DOCOMO, INC., Chiyoda-ku Tokyo 100-6150 (JP)
(72) Inventor: TAKEDA, Kazuki, Tokyo 100-6150 (JP); NAGATA, Satoshi, Tokyo 100-6150 (JP); GUO, Shaozhen, Beijing 100190 (CN); WANG, Lihui, Beijing 100190 (CN); HOU, Xiaolin, Beijing 100190 (CN); JIANG, Huiling, Beijing 100190 (CN)
(74) Representative: Hoffmann Eitle
(86) International application number: PCT/JP2017/009837
(87) International publication number: WO 2018/163432

(57) **Abstract**

The present invention is designed to properly control enabling or disabling hopping of DMRS sequence in sTTIs shorter than 1-ms TTIs. According to one aspect of the present invention, a user terminal has a transmission section that transmits a demodulation reference signal for an uplink (UL) channel in a second transmission time interval (TTI) that is shorter than a first TTI, and a control section that controls enabling or disabling hopping of a base sequence for the demodulation reference signal based on whether or not an orthogonal cover code (OCC) is applied to the demodulation reference signal.

## Description

### Technical Field

The present invention relates to a user terminal and a radio communication method in next-generation mobile communication systems.

### Background Art

In the UMTS (Universal Mobile Telecommunications System) network, the specifications of long-term evolution (LTE) have been drafted for the purpose of further increasing high speed data rates, providing lower latency and so on (see non-patent literature 1). In addition, successor systems of LTE (referred to as, for example, "LTE-A (LTE-Advanced)," "FRA (Future Radio Access)," "4G," "5G," "5G+ (plus)," "NR (New RAT (New Radio Access Technology))," "LTE Rel. 14," "LTE Rel. 15 (or later versions)," and so on) are under study for the purpose of achieving further broadbandization and increased speed beyond LTE.

In existing LTE systems (for example, LTE Rel. 13 and earlier versions), downlink (DL) and/or uplink (UL) communication are carried out by using 1-ms transmission time intervals (TTIs) (also referred to as "subframes" and so on). This 1-ms TTI is the unit of time it takes to transmit 1 channel-encoded data packet, and is the processing unit in, for example, scheduling, link adaptation, retransmission control (HARQ-ACK (Hybrid Automatic Repeat reQuest-ACKnowledgment)) and so on. A TTI of 1 ms is comprised of 2 slots.

Also, in existing LTE systems, a radio base station demodulates UL channels (including a UL data channel (for example, PUSCH (Physical Uplink Shared CHannel)) and/or a UL control channel (for example, PUCCH (Physical Uplink Control CHannel))) based on the result of channel estimation using the demodulation reference signal (DMRS).

Also, in existing LTE systems, a user terminal multiplexes and transmits a UL channel and a DMRS in a TTI of 1 ms. In a TTI of 1 ms, multiple DMRSs of different layers for the same user terminal (or for different user terminals) are orthogonal-multiplexed using cyclic shifts (CSs) and/or orthogonal spreading codes (for example, orthogonal cover codes (OCCs)).

### Citation List

### Non-Patent Literature

Non-Patent Literature 1: 3GPP TS36.300 V8.12.0 "Evolved Universal Terrestrial Radio Access (E-UTRA) and Evolved Universal Terrestrial Radio Access Network (E-UTRAN); Overall Description; Stage 2 (Release 8)," April, 2010

### Summary of Invention

### Technical Problem

Envisaging future radio communication systems (for example, LTE Rel. 14 or 15, 5G, NR, etc.), research is underway to introduce TTIs (for example, TTIs that are shorter than 1-ms TTIs (and that are also referred to as "short TTIs," "sTTIs," "second sTTIs," "slots," "mini-slots" and so forth)) having different time lengths than the 1-ms TTIs used in existing LTE systems (also referred to as "subframes," "first TTIs," "slots," and so on).

In existing LTE systems (for example, LTE Rel. 13 or earlier versions), interference between cells is reduced by hopping a base sequence for a DMRS (DMRS sequence) for a UL channel per slot in a TTI of 1 ms (for example, sequence group hopping (also referred to as "SGH" or simply "group hopping"), sequence hopping, etc.). In existing LTE systems, the application of hopping (whether to "enable" or "disable" hopping, in other words) to the DMRS sequence is controlled based on higher layer signaling.

However, in existing LTE systems, the application of hopping to the DMRS sequence is controlled on the assumption that a TTI is 1 ms. Consequently, the problem when sTTIs that are shorter than 1-ms TTIs are used lies in how to control the application of hopping to DMRS sequences (whether to enable or disable hopping).

The present invention has been made in view of the above, and it is therefore an object of the present invention to provide a user terminal and a radio communication method, whereby, when sTTIs, which are shorter than 1-ms TTIs, are used, the application of hopping to DMRS sequences can be controlled properly.

### Solution to Problem

According to one aspect of the present invention, a user terminal has a transmission section that transmits a demodulation reference signal for an uplink (UL) channel in a second transmission time interval (TTI) that is shorter than a first TTI, and a control section that controls enabling or disabling hopping of a base sequence for the demodulation reference signal based on whether or not an orthogonal cover code (OCC) is applied to the demodulation reference signal.

### Advantageous Effects of Invention

According to the present invention, the application of hopping to DMRS sequences can be controlled properly when sTTIs that are shorter than 1-ms TTIs are used.

### Brief Description of Drawings

FIGs. 1A and 1B provide diagrams to show examples of sTTIs;
FIGs. 2A and 2B are diagrams to show examples of DMRS structures in sTTIs of 2 (or 3) symbols;
FIG. 3 is a diagram to show examples of DMRS structures in sTTIs of 7 symbols;
FIGs. 4A and 4B are diagrams to show other examples of DMRS structures in sTTIs of 7 symbols;
FIGs. 5A and 5B are diagrams to show examples of predetermined field values in DCI, according to a first example of the present invention;
FIGs. 6A to 6C are diagrams to show examples of DMRS structures in sTTIs of 7 symbols, according to a second example of the present invention;
FIGs. 7A and 7B are diagrams to show other examples of DMRS structures in sTTIs of 7 symbols, according to the second example;
FIG. 8 is a flowchart to show an example of control for enabling or disabling SGH in sTTIs, according to a third example of the present invention;
FIG. 9 is a diagram to show an exemplary schematic structure of a radio communication system according to the present embodiment;
FIG. 10 is a diagram to show an exemplary overall structure of a radio base station according to the present embodiment;
FIG. 11 is a diagram to show an exemplary functional structure of a radio base station according to the present embodiment;
FIG. 12 is a diagram to show an exemplary overall structure of a user terminal according to the present embodiment;
FIG. 13 is a diagram to show an exemplary functional structure of a user terminal according to the present embodiment; and
FIG. 14 is a diagram to show an exemplary hardware structure of a radio base station and a user terminal according to the present embodiment.

### Description of Embodiments

In existing LTE systems (for example, LTE Rel. 13 or earlier versions), 2 slots are provided in a TTI of 1 ms. Also, the DMRS that is used to demodulate the PUSCH is allocated to 1 symbol in each slot (2 symbols in a TTI of 1 ms). As for DMRS base sequences (also referred to as the "DMRS sequences" and so on), for example, Zadoff-Chu (ZC)-based sequences are used.

Also, the number of DMRS sequences in existing LTE systems is configured to 30 or 60, depending on the bandwidth. For example, the number of DMRS sequences is 30 when the bandwidth is 5 physical resource blocks (also referred to as "PRBs," "resource blocks (RBs)," etc.) or less, and 60 when the bandwidth is 6 PRBs or more.

In existing LTE systems, when the bandwidth is 5 PRBs or less, 30 DMRS sequences are identified by group numbers (u=0 to 29) (also referred to as "group indices" and so on). Also, when the bandwidth is 6 PRBs or more, 60 DMRS sequences are identified by group numbers (u=0 to 29) and base sequence numbers (v=0 and 1) (also referred to as "sequence indices" and so on).

When the same DMRS sequence is used by a number of user terminals in different cells, transmission signals from each of these user terminals interfere with each other. Therefore, in order to prevent these user terminals from continuing using the same DMRS sequence, the DMRS sequence is made to hop per slot in a 1-ms TTI. For example, in existing LTE systems, 2 kinds of hopping methods are used (namely, sequence group hopping and sequence hopping).

In sequence group hopping (also referred to as "SGH," or simply "group hopping"), the above-noted group number (u) hops, per slot, within a TTI of 1-ms. In SGH, each slot's group number (u) is determined based on a hopping pattern (f_{gh}) and a sequence shift pattern (fₛₛ). These hopping pattern and/or sequence shift pattern may be based on a physical cell ID (cell ID) or a virtual cell ID. A user terminal may identify the physical cell ID from the sequence number of synchronization signals (PSS/SSS), and identify the virtual cell ID from RRC signaling. Note that, in existing LTE systems, for example, 17 hopping patterns and 30 sequence shift patterns are used.

Meanwhile, in sequence hopping, the above-mentioned base sequence number (v) hops per slot, within 1 TTI. Each slot's base sequence number (v) is determined based on a physical cell ID or a virtual cell ID. Sequence hopping is used when the bandwidth is 6 PRBs or more, and is not used in combination with SGH (when SGH is used, v=0 is configured).

As described above, in existing LTE systems, interference is randomized between cells, so that SGH or sequence hopping can be applied to DMRS sequences. Note that whether to enable SGH or not is reported to a user terminal through higher layer signaling. Similarly, whether to enable sequence hopping or not is reported to a user terminal through higher layer signaling.

In existing LTE systems, cyclic shifts (CSs) and/or orthogonal spreading codes (for example, orthogonal cover codes (OCCs)) are used to orthogonalize DMRSs among a number of user terminals in the same cell. For example, in LTE Rel. 10, code division multiplexing (CDM) to use OCCs is applied to DMRSs, in addition to the CS-based orthogonalization of LTE Rel. 8.

To be more specific, by applying different OCCs of length 2 ([1,1] or [1, -1]) to 2 DMRSs 0 and 1, which are allocated respectively to 2 symbols in a subframe, the 2 DMRSs 0 and 1 are orthogonalized. In LTE Rel. 10, 8 combinations of CSs and OCCs are set forth, and which combination of a CS and an OCC is applied to a DMRS is indicated to a user terminal, by a predetermined field (for example, a 3-bit cyclic shift (CS) field) in L1/L2 signaling (downlink control information (DCI)). The 2 DMRSs 0 and 1 need not be the same base sequence (DMRS sequence).

Such OCCs can be applied to single-user (SU)-MIMO (Multiple-Input and Multiple-Output), multi-user (MU)-MIMO and so forth, in which multiple layers are space-multiplexed. Also, DMRSs 0 and 1 may not be the same frequency band (and/or bandwidth). Consequently, OCCs can be applied to MIMO among multiple user terminals, where PUSCHs of different frequency bands (and/or bandwidths) are scheduled, as well as to MU-MIMO among multiple user terminals, where PUSCHs of the same frequency band (and/or bandwidth) are scheduled.

Meanwhile, orthogonalization based on OCCs presumes that the same base sequence (DMRS sequence) is used between 2 slots in a subframe. Consequently, when OCCs are used, it is preferable to disable SGH and sequence hopping, which have been mentioned earlier. To be more specific, when PUSCHs of varying bandwidths are scheduled for a number of user terminals, in MU-MIMO among these user terminals, it is preferable to disable SGH by means of higher layer signaling (including RRC and broadcast channels).

Now, future radio communication systems (for example, LTE Rel. 14 or 15, 5G, NR, etc.) are under study to introduce TTIs (also referred to as "sTTIs," "short TTIs," "second TTIs," etc.) that have shorter time lengths (TTI lengths) than the 1-ms TTIs (also referred to as "subframes," "first TTIs," etc.) used in existing LTE systems, in order to realize low latency (latency reduction) and highly efficient control.

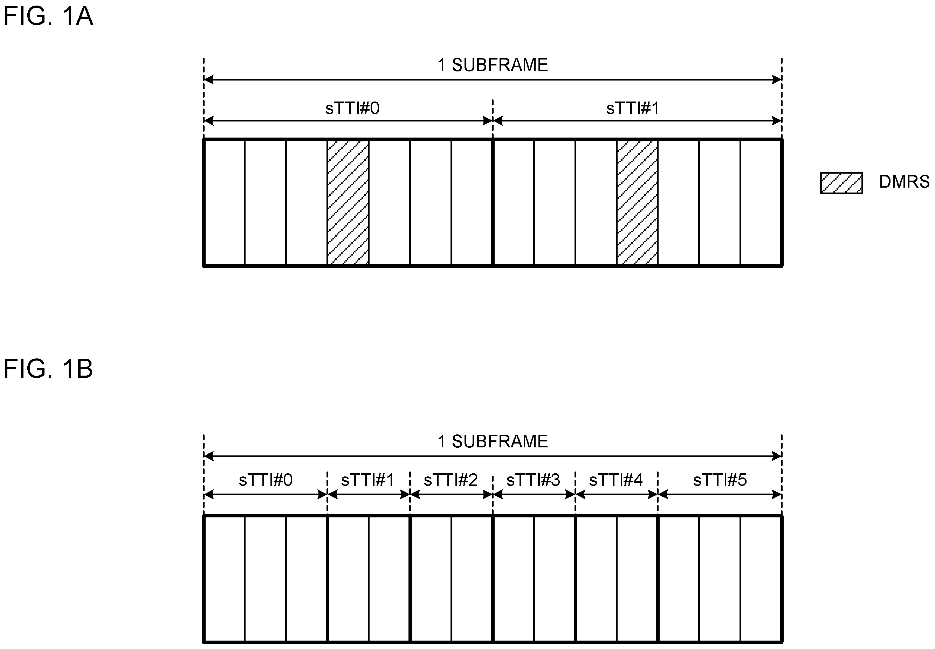

FIGs. 1 provide diagrams to show example of sTTIs. Note that, although FIGs. 1 assume example cases where normal cyclic prefixes (CPs) are used (and where 1 subframe is comprised of 14 symbols), this is by no means limiting. sTTIs can be applied as appropriate to cases where enhanced CPs are used (and where 1 subframe is comprised of 12 symbols) and/or suchlike cases. Also, these symbols are, for example, OFDM (Orthogonal Frequency-Division Multiplexing) symbols (including DFT-S (Discrete Fourier Transform-Spread)-OFDM symbols).

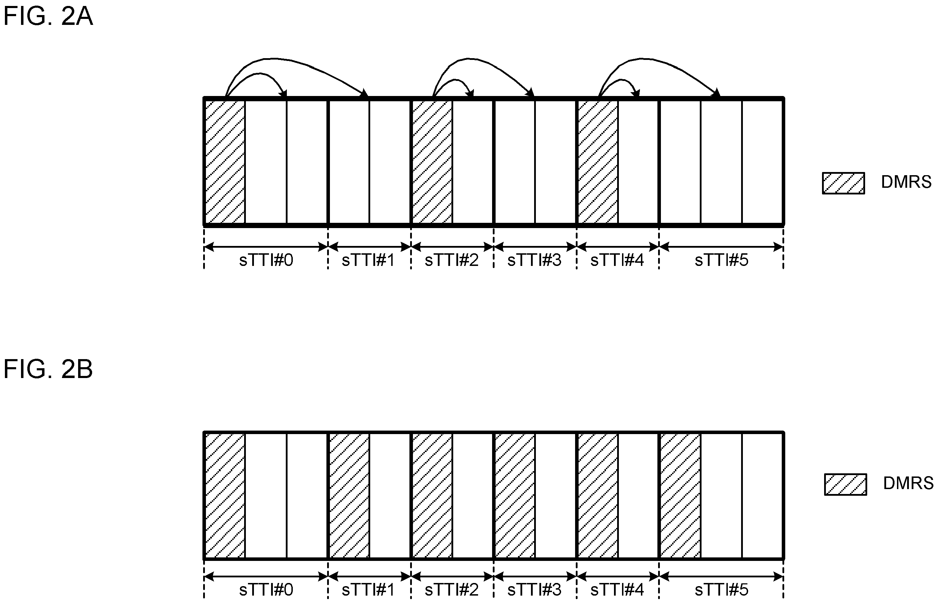

FIG. 1A shows sTTIs of 7 symbols. For example, in FIG. 1A, 2 sTTIs #0 and #1, each comprised of 7 symbols, are included in 1 subframe (1-ms TTI). When transmitting a PUSCH in every sTTI shown in FIG. 1A, the DMRS for demodulating the PUSCH may be allocated to a predetermined symbol in each sTTI (here, 1 symbol at the center). Note that the allocation of DMRSs shown in FIG. 1A is simply an example, and this is by no means limiting.

FIG. 1B shows sTTIs of 2 (or 3) symbols. For example, referring to FIG. 1B, 1 subframe includes sTTI #0 of 3 symbols, sTTI #1 to #4, each comprised of 2 symbols, and sTTI #3 of 3 symbols. When a PUSCH is transmitted in every sTTI shown in FIG. 1B, the DMRS may be allocated to at least one symbol shared by a number of sTTIs, or the DMRS may be allocated to at least one symbol in each sTTI.

FIGs. 2 are diagrams to show examples of DMRS structures in sTTIs of 2 (or 3) symbols. In FIG. 2A, the DMRS is allocated to a predetermined symbol (here, the first symbol) that is shared in a predetermined number of (here, 2) consecutive sTTIs.

For example, referring to FIG. 2A, when sTTIs #0 and #1 are allocated to the PUSCH for the same user terminal, it is possible to transmit the DMRS in one of the 2 sTTIs (for example, sTTI #0) and not transmit the DMRS in the other one (for example, sTTI #1). The radio base station demodulates the PUSCHs of sTTIs #0 and #1 by using the DMRS contained in sTTI #0. On the other hand, when sTTIs #0 and #1 are allocated to PUSCHs for multiple different user terminals, multiple DMRSs are multiplexed on the top symbol. A user terminal, where the PUSCH is allocated to both sTTI #0 and sTTI #1, can transmit the DMRS in the same symbol (for example, symbol 0 included in sTTI #0). The radio base station demodulates the PUSCHs of sTTIs #0 and #1 using the DMRS contained in sTTI #0. Note that, when multiplexing multiple DMRSs, for example, CSs and/or subcarriers allocated in the shape of comb teeth may be used.

In FIG. 2B, a DMRS is allocated to a predetermined symbol (here, the first symbol) in every sTTI. As shown in FIG. 2B, a configuration in which every sTTI contains a symbol for allocating a DMRS (also referred to as a "DMRS symbol" and the like) is also referred to as "self-contained DMRS" or the like.

As shown in FIGs. 2A and 2B, when an sTTI is comprised of 2 symbols and/or 3 symbols, a single DMRS symbol is provided in one or more sTTIs. Consequently, when an sTTI is comprised of 2 or 3 symbols, OCCs, which require multiple DMRS symbols per user terminal, are not applicable. In order to reduce inter-cell interference when no OCC is applied, SGH or sequence hopping, which has been mentioned earlier, needs to be enabled, and yet the problem lies in how to enable SGH or sequence hopping.

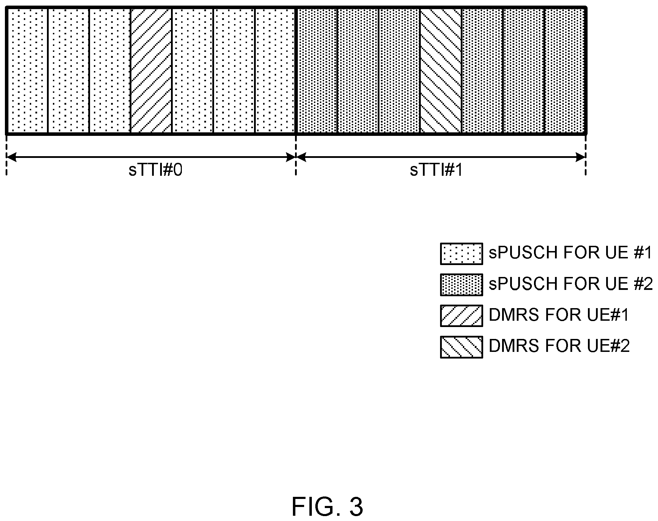

FIG. 3 is a diagram to show examples of DMRS structures in sTTIs of 7 symbols. In FIG. 3, PUSCHs (also referred to as "sPUSCHs," "short PUSCHs," etc.) for different user terminals #1 and #2 are allocated to sTTIs #0 and #1, respectively. In FIG. 3, the DMRS for demodulating the PUSCH of user terminal #1 is allocated to a predetermined symbol in sTTI #0 (here, the central symbol). On the other hand, the DMRS for demodulating the PUSCH of user terminal #2 is allocated to a predetermined symbol in sTTI #1 (here, the central symbol).

As shown in FIG. 3, when a single DMRS symbol is provided in each sTTI and different user terminals are allocated in contiguous sTTIs, OCCs, which require multiple DMRS symbols per user terminal, are not applicable. In order to reduce inter-cell interference when no OCC is applied, SGH or sequence hopping, which has been mentioned earlier, need to be enabled, and yet the problem lies in how to enable SGH or sequence hopping.

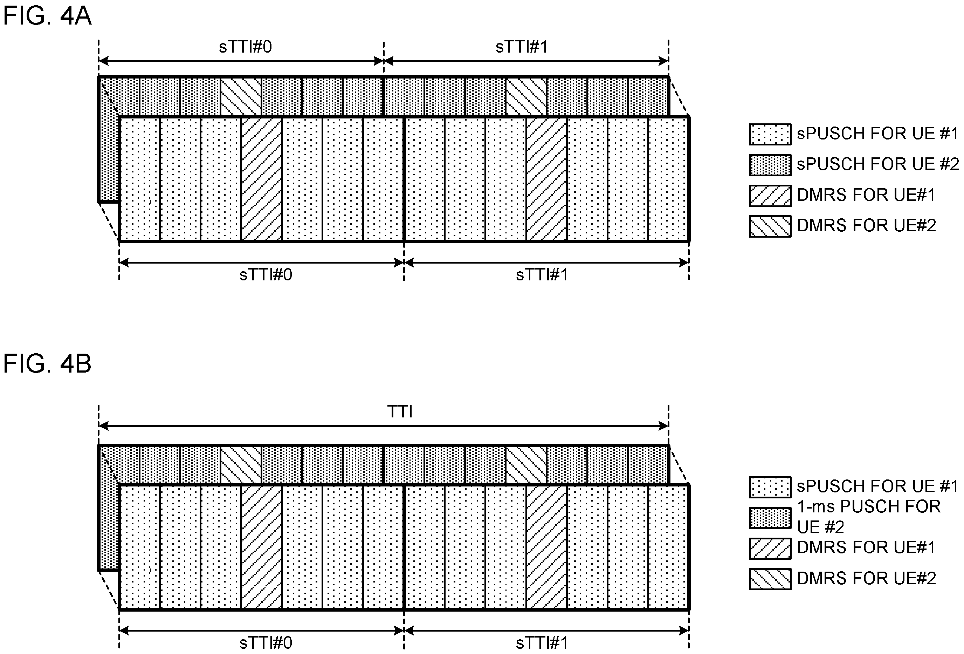

FIGs. 4 are diagrams to show other examples of DMRS structures in sTTIs of 7 symbols. In FIGs. 4, the same user terminal is allocated to contiguous sTTIs #0 and #1. FIG. 4A shows the case where multiple user terminals to use the same scheduling unit (here, an sTTI of 7 symbols) are space-multiplexed (MU-MIMO). For example, in FIG. 4A, sPUSCHs of user terminals #1 and #2 are space-multiplexed in contiguous sTTIs #0 and #1.

On the other hand, FIG. 4B shows the case where multiple user terminals to use different scheduling units (here, an sTTI of 7 symbols and a TTI of 1 ms) are space-multiplexed. For example, referring to FIG. 4B, user terminal #1, to which an sPUSCH is allocated in contiguous sTTIs #0 and #1, and user terminal #2, to which a PUSCH is allocated in a 1-ms TTI (subframe), are space-multiplexed.

As shown in FIG. 4A and 4B, when a single DMRS symbol is provided in each sTTI and the same user terminal is allocated to contiguous sTTIs, multiple DMRS symbols are provided for 1 user terminal in a TTI of 1 ms (2 contiguous sTTIs), so that OCCs are applicable. When OCCs are used, in order to properly demultiplex multiple DMRSs that have been multiplexed using OCCs, SGH or sequence hopping, which has been mentioned earlier, needs to be disabled, and so the problem lies in how to disable SGH or sequence hopping.

As described above, in future radio communication systems, how to control (enable or disable) the application of hopping (including SGH and/or sequence hopping, which have been mentioned earlier) to DMRS sequences within sTTIs.

So, the present inventors have worked on a method for properly controlling whether to enable and/or disable hopping of DMRS sequences within sTTIs, and arrived at the present invention. To be more specific, as an example of the present invention, the present inventors have come up with the idea of controlling whether to enable or disable DMRS (DeModulation Reference Signal) sequence (or DMRS base sequence) hopping based on whether OCCs are applied to the DMRS for an sTTI UL channel.

Now, the present embodiment will be described below in detail.
According to the present embodiment, the time length of symbols (symbol length) constituting a subframe (1-ms TTI) and the length of symbols constituting an sTTI are equal (that is, equal subcarrier spacing), but this is by no means limiting. For example, an sTTI may be comprised of the same number of symbols (for example, 14 symbols) as a 1-ms TTI, and have a symbol length shorter than the symbol length of a 1-ms TTI.

Also, according to the present embodiment described below, when a DMRS sequence hops, this might mean that the group number of this DMRS sequence hops (this is also referred to as "sequence group hopping (SGH)," "group hopping" and so on), and/or the base sequence number of this DMRS sequence (this is also referred to as "sequence hopping" and so on). Also, hopping of a DMRS sequence is not limited to above SGH and/or sequence hopping, as long as different DMRS sequences are used per predetermined period (for example, per sTTI). The following description will primarily focus on control for enabling or disabling SGH, as examples of DMRS sequence hopping, but the present invention is applicable to other types of hopping as well.

Also, in the present embodiment, the number of DMRS sequences may be the same as or different from that of existing LTE systems. Furthermore, a DMRS sequence may be identified based on a group number and/or a base sequence number. Also, the above-mentioned sTTI UL channel may be, for example, a UL data channel (also referred to as "sPUSCH," "PUSCH," etc.) and/or a UL control channel (also referred to as "SPUCCH," "PUCCH, etc.").

### (First Example)

With a first example of the present invention, control will be described below, whereby, when OCCs cannot be applied to the DMRS for a UL channel in an sTTI, DMRS sequence hopping (SGH and/or sequence hopping) is enabled in the sTTI.

As mentioned earlier, if an sTTI is comprised of 2 or 3 symbols, OCCs are not applicable because only a single DMRS symbol is allocated for 1 user terminal (FIGs. 2). Also, if an sTTI is comprised of 7 symbols and different user terminals are allocated per sTTI, OCCs are not applicable because only a single DMRS symbol is allocated for 1 user terminal (FIG. 3).

### <First Enabling Control>

When an OCC cannot be applied to a DMRS in an sTTI, SGH in the sTTI may be enabled by default, regardless of whether SGH is enabled in a 1-ms TTI (subframe). To be more specific, if an OCC cannot be applied to a DMRS in an sTTI, a user terminal may enable SGH in that sTTI, regardless of command information related to SGH or sequence hopping in 1-ms TTIs (command information for 1-ms TTIs).

Here, the command information for 1-ms TTIs (also referred to as "first command information for TTIs," "first command information," etc.) may be information to indicate whether SGH is enabled or not in 1-ms TTIs (groupHoppingEnabled), or may be information to indicate whether sequence hopping is enabled or not in 1-ms TTI (sequenceHoppingEnabled). This command information for 1-ms TTIs is reported from a radio base station to a user terminal by means of higher layer signaling.

### <Second Enabling Control>

Alternatively, when an OCC cannot be applied to a DMRS in an sTTI, SGH may be enabled in this sTTI by means of higher layer signaling. In this case, apart from the command information for 1-ms TTIs described above, command information (also referred to as "command information for sTTIs," "second command information for TTI," "second command information," etc.) related to DMRS sequence hopping (for example, SGH and/or sequence hopping) in sTTIs may be provided.

When an OCC cannot be applied to a DMRS in an sTTI, the user terminal may exert control so that SGH is enabled, in that sTTI, based on command information for sTTIs. The command information for sTTIs may be information to indicate whether DMRS hopping (for example, SGH and/or sequence hopping) is enabled or not in an sTTI. This command information for sTTIs is reported from a radio base station to a user terminal by means of higher layer signaling.

For example, when command information for sTTIs indicates that SGH should be enabled in an sTTI, the user terminal may enable SGH in the sTTI. By contrast, when the above command information for sTTIs indicates that SGH should be disabled in an sTTI, the user terminal may not enable (that is, disable) SGH in the sTTI.

### <Third Enabling Control>

Alternatively, when an OCC cannot be applied to a DMRS in an sTTI, SGH may be enabled in this sTTI by means of L1 signaling (physical layer signaling). In this case, the value of a predetermined field in DCI may indicate that DMRS sequence hopping (for example, SGH and/or sequence hopping) is enabled in sTTI. To be more specific, a user terminal enables SGH in the sTTI based on the value of a predetermined field in DCI.

For example, when the above predetermined filed value of DCI indicates that SGH should be enabled in an sTTI, the user terminal may enable SGH in the sTTI. On the other hand when command information for sTTIs indicates that SGH should be disabled in an sTTI, the user terminal does not have to enable (that is, can disable) SGH in the sTTI.

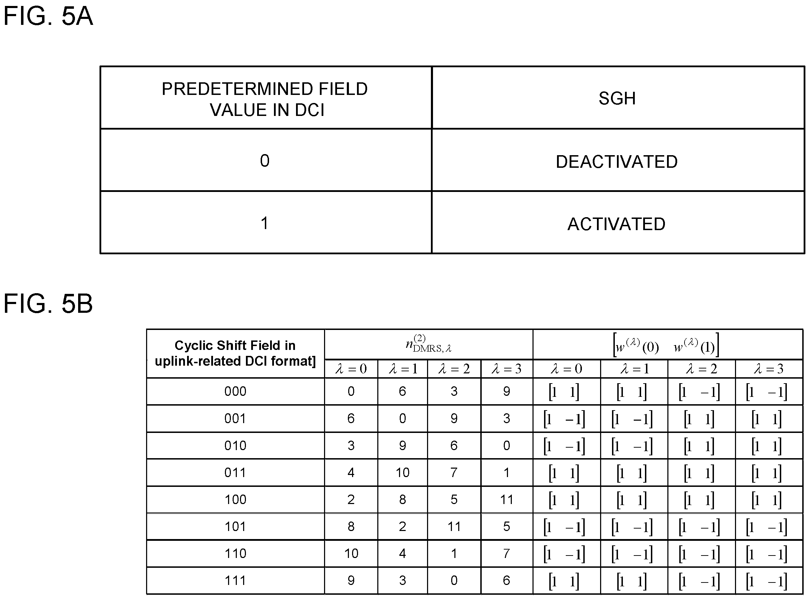

Also, the predetermined field in DCI may be a new field that is provided for controlling enabling and/or disabling DMRS sequence hopping in sTTIs. For example, as shown in FIG. 5A, the value of this predetermined field may indicate whether to enable or disable SGH in sTTIs.

Alternatively, the predetermined field in DCI may be an existing field (for example, the CS (Cyclic Shift) field). The value of the existing CS field indicates combinations of CSs and OCCs to be applied to DMRSs, as shown in FIG. 5B. For example, the CSI field shown in FIG. 5B may be altered so that OCC [1 1] is replaced by comb #0, and OCC [1-1] is replaced by comb #1.

In this way, according to the first example, when an OCC cannot be applied to a DMRS in an sTTI, SGH may be enabled in this sTTI. Therefore, DMRS sequence hopping is enabled per sTTI, so that DMRS-induced interference between cells can be reduced.

### (Second Example)

With a second example of the present invention, control will be described below, whereby, when OCCs can be applied to the DMRS for a UL channel in an sTTI, DMRS sequence hopping (SGH and/or sequence hopping) is disabled in the sTTI.

As described above, even when a single DMRS symbol is provided in each sTTI, if the same user terminal is allocated to a number of consecutive sTTIs, OCCs can be applied to the DMRS of each sTTI (FIGs. 4).

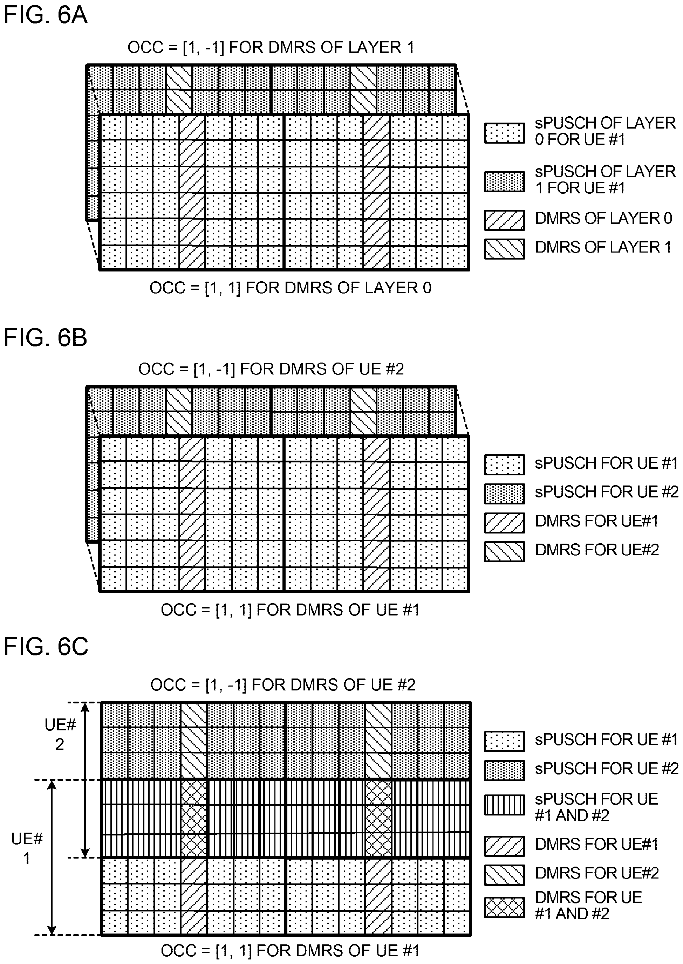

FIGs. 6 are diagrams to show examples of DMRS structures in sTTIs of 7 symbols. In FIGs. 6A to 6C, sPUSCHs of the same user terminal are allocated in 2 contiguous sTTIs. In FIGs. 6A to 6C, the center symbol in each sTTI is the DMRS symbol, but the locations of DMRS symbols is not limited to those shown in FIGs. 6A to 6C.

In FIG. 6A, an example of single-user multi-layer transmission is shown. For example, in FIG. 6A, layer 0 and layer 1 sPUSCHs of user terminals #1 are space-multiplexed in 2 contiguous sTTIs. Also, OCC [1, 1] is applied to the DMRS for the layer 0 sPUSCH, and OCC [1, -1] is applied to the DMRS for the layer 1 sPUSCH. By this means, the DMRSs of layers 0 and 1 are orthogonal-multiplexed (CDM).

In FIG. 6B, an example of multi-user MIMO to use the same frequency band is shown. For example, in FIG. 6B, the same frequency band (the same PRB) is scheduled for sPUSCHs for user terminals #1 and #2 in 2 contiguous sTTIs. Also, OCC [1, 1] is applied to the DMRS for the sPUSCH of user terminal #1, and OCC [1, -1] is applied to the DMRS for the sPUSCH of user terminal #2. By this means, the DMRSs of user terminals #1 and #2 are orthogonal-multiplexed (CDM).

In FIG. 6C, an example of multi-user MIMO to use the same frequency band is shown. For example, in FIG. 6C, different frequency bands (part of the PRBs overlapping) are scheduled for sPUSCHs for user terminals #1 and #2 in 2 contiguous sTTIs, respectively. Also, OCC [1, 1] is applied to the DMRS for the sPUSCH of user terminal #1, and OCC [1, -1] is applied to the DMRS for the sPUSCH of user terminal #2. Consequently, when OCCs are used, DMRSs for user terminals #1 and #2, to which different frequency bands (different PRBs and/or different numbers of PRBs) are allocated, are orthogonal-multiplexed (CDM).

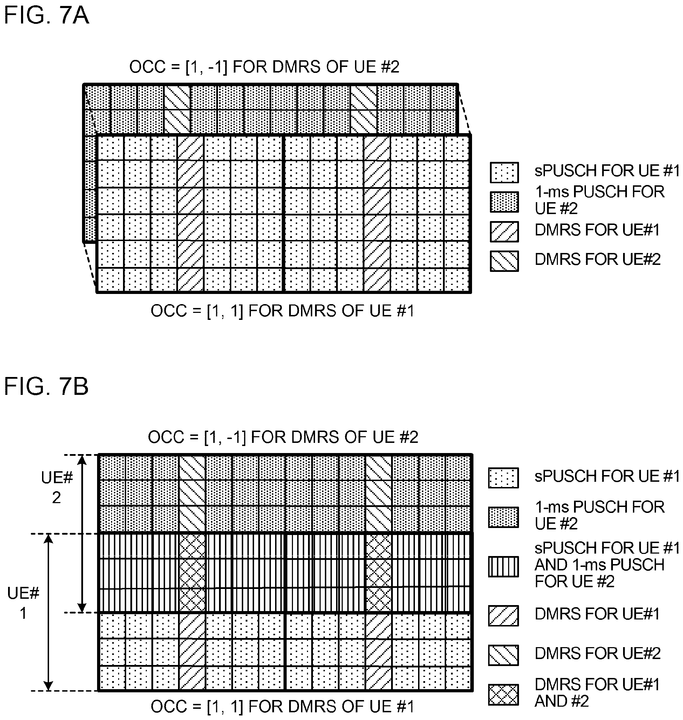

FIGs. 7 are diagrams to show other examples of DMRS structures in sTTIs of 7 symbols. In FIGs. 7A and 7B, an sPUSCH for user terminal #1, where 2 contiguous sTTIs are allocated, and a PUSCH for user terminal #2, where a 1-ms TTI (1 subframe) is allocated, are space-multiplexed. Note that the locations of DMRS symbols shown in FIGs. 7A and 7B are simply examples, and are by no means limiting.

In FIG. 7A, an example of multi-user MIMO to use the same frequency band is shown. For example, in FIG. 7A, the same frequency band (the same PRB) is scheduled for the sPUSCH of user terminal #1 in 2 contiguous sTTIs and for the PUSCH of user terminal #2 in a 1-ms TTI. In FIG. 7A, OCC [1, 1] is applied to the DMRS for the sPUSCH of user terminal #1, and OCC [1, -1] is applied to the DMRS for demodulating the sPUSCH of user terminal #2. By this means, the DMRSs of user terminal #1 and user terminal #2 are orthogonal-multiplexed (CDM).

In FIG. 7B, an example of multi-user MIMO to use different frequency bands is shown. For example, in FIG. 7B, different frequency bands (part of the PRBs) are scheduled for the sPUSCH of user terminal #1 in 2 contiguous sTTIs and for the PUSCH of user terminal #2 in a 1-ms TTI. Also, OCC [1, 1] is applied to the DMRS for the sPUSCH of user terminal #1, and OCC [1, -1] is applied to the DMRS for the PUSCH of user terminal #2. Consequently, when OCCs are used, DMRSs for user terminals #1 and #2, to which different frequency bands (PRBs and/or different numbers of PRBs) are allocated, are orthogonal-multiplexed (CDM).

As described above, even when a single DMRS symbol is provided in each sTTI, if the same user terminal is allocated to a number of consecutive sTTIs, OCCs can be applied.

### <First Disabling Control>

If an OCC can be applied to a DMRS in an sTTI, SGH may be disabled, in this sTTI, based on command information for 1-ms TTIs, which has been described earlier (for example, groupHoppingEnabled or sequenceHoppingEnabled). To be more specific, when an OCC can be applied to a DMRS in an sTTI, a user terminal may exert control so that SGH is disabled, in that sTTI, based on command information for sTTIs, which has been described earlier.

For example, when command information for 1-ms TTIs, which has been described earlier, indicates that SGH or sequence hopping should be disabled in a 1-ms TTI, the user terminal may disable SGH in this sTTI. On the other hand, when command information for sTTIs indicates that SGH should be disabled in an sTTI, the user terminal does not have to disable (that is, can enable) SGH in the sTTI.

### <Second Disabling Control>

Alternatively, when an OCC can be applied to a DMRS in an sTTI, SGH may be enabled, in this sTTI, by means of higher layer signaling. In this case, apart from the command information for 1-ms TTIs described above, the command information for sTTIs, which has also been described earlier, may be provided for use. To be more specific, when an OCC can be applied to a DMRS in an sTTI, a user terminal may exert control so that SGH is disabled, in that sTTI, based on command information for sTTIs.

For example, when command information for sTTIs indicates that SGH should be disabled in an sTTI, the user terminal may disable SGH in the sTTI. On the other hand, when command information for sTTIs indicates that SGH should be enabled in an sTTI, the user terminal does not have to disable (that is, can enable) SGH in the sTTI.

### <Third Disabling Control>

When an OCC can be applied to a DMRS in an sTTI, SGH may be disabled in this sTTI by means of L1 signaling (physical layer signaling). To be more specific, a user terminal may control disabling SGH in the sTTI based on the value of a predetermined field in DCI.

For example, when the value of the above predetermined field in DCI indicates that SGH should be disabled in an sTTI, the user terminal may disable SGH in the sTTI. On the other hand when command information for sTTIs indicates that SGH should be enabled in an sTTI, the user terminal does not have to disable (that is, can enable) SGH in the sTTI.

The predetermined field of DCI may be a new field to indicate whether SGH is enabled or disabled in sTTIs, as shown in FIG. 5A, or may be an alternation of an existing field (for example, the CS field of FIG. 5B).

As described above, according to the second example, when an OCC can be applied to a DMRS in an sTTI, control is exerted so that DMRS sequence hopping is disabled in the sTTI. Therefore, it is possible to prevent different DMRS sequences from being used among multiple DMRS symbols to which OCCs are applied. As a result of this, it is possible to properly demultiplex multiple DMRSs that are multiplexed using OCCs.

### (Third Example)

With a third example of the present invention, user terminal operations for controlling enabling or disabling DMRS sequence hopping (SGH and/or sequence hopping) in sTTIs will be described.

A user terminal may autonomously control whether to enable or disable the above-mentioned hopping based on whether or not an OCC is applied to a DMRS in an sTTI. To be more specific, when an OCC is applied to a DMRS in an sTTI, the user terminal may disable the above hopping without higher layer signaling and/or DCI-based command information. Furthermore, when an OCC is not applied to a DMRS in an sTTI, the user terminal may enable the above hopping, autonomously, without higher layer signaling and/or DCI-based command information.

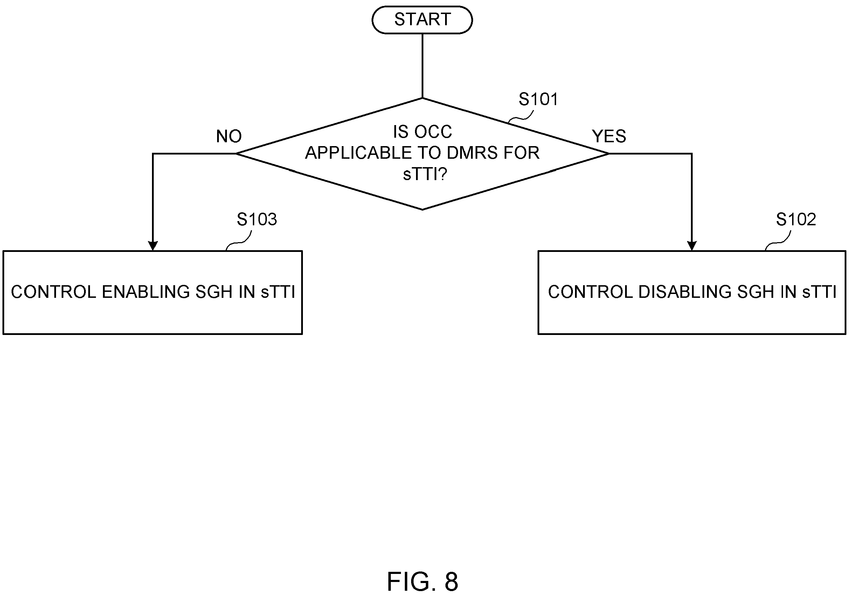

FIG. 8 is a flowchart to show an example of control for enabling or disabling SGH in sTTIs, according to a third example of the present invention. As shown in FIG. 8, a user terminal judges whether or not an OCC can be applied to a DMRS in an sTTI (step S101).

For example, in step S101, a user terminal that uses sTTIs of 7 symbols as scheduling units may judge, when an sPUSCH of the user terminal is allocated in 2 contiguous sTTIs in a subframe, that OCCs can be applied to DMRSs in these 2 sTTIs (for example, FIGs. 4, 6 and 7). Also, when the same frequency band (the number of PRBs and/or PRBs) and/or the same transmission power (PSD (Power Spectrum density)) is allocated in 2 contiguous sTTIs in a subframe, the user terminal judges that OCCs can be applied to the DMRSs in the 2 sTTIs.

On the other hand, in step S101, a user terminal to use sTTIs of 2 symbols as scheduling units may judge that OCCs cannot be applied to the DMRSs of these sTTIs (for example, FIG. 2). Also, a user terminal to use sTTIs of 7 symbols as scheduling units may judge that it is not possible to apply OCCs to the DMRSs of these sTTIs, when an sPUSCH is allocated to only 1 sTTI in a subframe (for example, FIG. 3).

When it is judged in step S101 that an OCC can be applied to a DMRS in an sTTI (if the above conditions to make an OCC applicable are satisfied) (step S101;YES), the user terminal may disable SGH in the sTTI (step S102).

Note that, in step S102, the user terminal may disable SGH in the sTTI without higher layer signaling and/or DCI-based command information. Alternatively, the user terminal may disable SGH in the sTTI based on higher layer signaling (command information for sTTIs or command information for sTTIs) (first or second disabling control). Alternatively, the user terminal may disable SGH in the sTTI based on the value of a predetermined field of DCI (third disabling control).

Meanwhile, when it is judged in step S101 that an OCC cannot be applied to a DMRS in an sTTI (if the above conditions to make an OCC applicable are not satisfied) (step S101; NO), the user terminal may enable SGH in the sTTI (step S103).

In step S103, the user terminal may enable SGH in an sPUSCH regardless of whether SGH is enabled in a 1-ms TTI (first enabling control). Alternatively, the user terminal may enable SGH in the sTTI based on higher layer signaling (second enabling control). Alternatively, the user terminal may enable SGH in the sTTI based on the value of a predetermined field of DCI (third enabling control).

As described above, in the third example, DMRS sequence hopping (SGH and/or sequence hopping) is controlled to be enabled or disabled in sTTIs, so that interference between DMRSs can be reduced between cells, and orthogonalization of DMRSs using OCCs can be controlled properly.

### (Other Examples)

As described above, in the present embodiment, examples have been described in which DMRS sequence hopping in sTTIs is controlled to be enabled or disabled based on whether or not OCCs are applied to DMRSs in sTTIs. Note that, in the above-described embodiments, a user terminal may control whether to enable or disable DMRS sequence hopping in sTTIs, based on higher layer signaling (command information for 1-ms TTIs or command information for sTTI) and/or a predetermined field value in DCI, without knowing whether OCCs are applied to DMRSs in sTTIs.

### (Radio Communication System)

Now, the structure of a radio communication system according to the present embodiment will be described below. In this radio communication system, the radio communication methods according to the above-described embodiments are employed. Note that the radio communication method according to each embodiment described above may be used alone or may be used in combination.

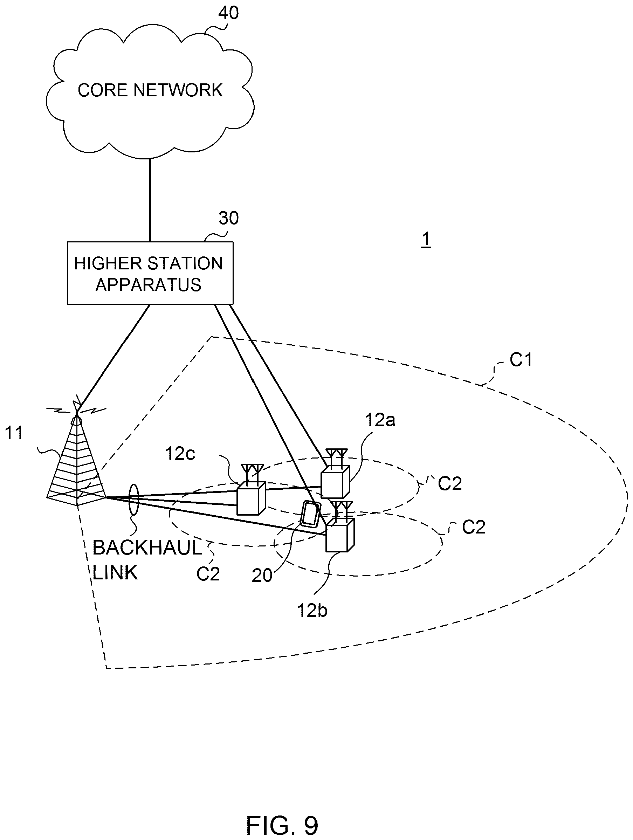

FIG. 9 is a diagram to show an exemplary schematic structure of a radio communication system according to the present embodiment. A radio communication system 1 can adopt carrier aggregation (CA), which groups a number of fundamental frequency blocks (component carriers (CCs)) into one, where an LTE system bandwidth (for example, 20 MHz) is used as 1 unit, and/or dual connectivity (DC). Note that the radio communication system 1 may be referred to as "SUPER 3G," "LTE-A (LTE-Advanced)," "IMT-Advanced," "4G," "5G," "FRA (Future Radio Access)," "NR (New RAT)" and so on.

The radio communication system 1 shown in FIG. 9 includes a radio base station 11 that forms a macro cell C1, and radio base stations 12a to 12c that are placed within the macro cell C1 and that form small cells C2, which are narrower than the macro cell C1. Also, user terminals 20 are placed in the macro cell C1 and in each small cell C2. A structure in which different numerologies are applied between cells may be adopted here. Note that a "numerology" refers to a set of communication parameters that characterize the design of signals in a given RAT, or the design of the RAT.

The user terminals 20 can connect with both the radio base station 11 and the radio base stations 12. The user terminals 20 may use the macro cell C1 and the small cells C2, which use different frequencies, at the same time, by means of CA or DC. Also, the user terminals 20 can execute CA or DC by using a plurality of cells (CCs) (for example, two or more CCs). Furthermore, the user terminals can use licensed-band CCs and unlicensed-band CCs as a plurality of cells.

Furthermore, the user terminals 20 can communicate based on time division duplexing (TDD) or frequency division duplexing (FDD) in each cell. A TDD cell and an FDD cell may be referred to as a "TDD carrier (frame structure type 2)" and an "FDD carrier (frame structure type 1)," respectively.

In each cell (carrier), either 1-ms TTIs (subframes) or short TTI (sTTIs) may be used, or both 1-ms TTIs and sTTIs may be used.

Between the user terminals 20 and the radio base station 11, communication can be carried out using a carrier of a relatively low frequency band (for example, 2 GHz) and a narrow bandwidth (referred to as, for example, an "existing carrier," a "legacy carrier," and/or the like). Meanwhile, between the user terminals 20 and the radio base stations 12, a carrier of a relatively high frequency band (for example, 3.5GHz, 5GHz, 30 to 70 GHz and so on) and a wide bandwidth may be used, or the same carrier as that used in the radio base station 11 may be used. Note that the structure of the frequency band for use in each radio base station is by no means limited to these.

A structure may be employed here in which wire connection (for example, means in compliance with the CPRI (Common Public Radio Interface) such as optical fiber, the X2 interface and so on) or wireless connection is established between the radio base station 11 and the radio base station 12 (or between 2 radio base stations 12).

The radio base station 11 and the radio base stations 12 are each connected with higher station apparatus 30, and are connected with a core network 40 via the higher station apparatus 30. Note that the higher station apparatus 30 may be, for example, access gateway apparatus, a radio network controller (RNC), a mobility management entity (MME) and so on, but is by no means limited to these. Also, each radio base station 12 may be connected with the higher station apparatus 30 via the radio base station 11.

Note that the radio base station 11 is a radio base station having a relatively wide coverage, and may be referred to as a "macro base station," a "central node," an "eNB (eNodeB)," a "transmitting/receiving point" and so on. Also, the radio base stations 12 are radio base stations having local coverages, and may be referred to as "small base stations," "micro base stations," "pico base stations," "femto base stations," "HeNBs (Home eNodeBs)," "RRHs (Remote Radio Heads)," "transmitting/receiving points" and so on. Hereinafter the radio base stations 11 and 12 will be collectively referred to as "radio base stations 10," unless specified otherwise.

The user terminals 20 are terminals to support various communication schemes such as LTE, LTE-A and so on, and may be either mobile communication terminals or stationary communication terminals. Furthermore, the user terminals 20 can perform device-to-device (D2D) communication with other user terminals 20.

In the radio communication system 1, as radio access schemes, OFDMA (orthogonal Frequency Division Multiple Access) can be applied to the downlink (DL), and SC-FDMA (Single-Carrier Frequency Division Multiple Access) can be applied to the uplink (UL). OFDMA is a multi-carrier communication scheme to perform communication by dividing a frequency bandwidth into a plurality of narrow frequency bandwidths (subcarriers) and mapping data to each subcarrier. SC-FDMA is a single-carrier communication scheme to mitigate interference between terminals by dividing the system bandwidth into bands formed with one or continuous resource blocks per terminal, and allowing a plurality of terminals to use mutually different bands. Note that the uplink and downlink radio access schemes are not limited to the combination of these, and OFDMA may be used in the UL.

DL channels that are used in radio communication system 1 include a DL data channel that is shared by each user terminal 20 (also referred to as a "PDSCH (Physical Downlink Shared CHannel)," a "DL shared channel," an "sPDSCH," a "1-ms PDSCH," and so forth), a broadcast channel (PBCH (Physical Broadcast CHannel)), L1/L2 control channels, and so forth. At least one of user data, higher layer control information, SIBs (System Information Blocks) and so forth is communicated in the PDSCH. Also, the MIB (Master Information Block) is communicated in the PBCH.

The L1/L2 control channels include DL control channels (also referred to as "PDCCH (Physical Downlink Control CHannel)," "EPDCCH (Enhanced Physical Downlink Control CHannel)," "sPDCCH," etc.), PCFICH (Physical Control Format Indicator CHannel), PHICH (Physical Hybrid-ARQ Indicator CHannel) and so on. Downlink control information (DCI), including PDSCH and PUSCH scheduling information, is communicated by the PDCCH. The number of OFDM symbols to use for the PDCCH is communicated by the PCFICH. The EPDCCH is frequency-division-multiplexed with the PDSCH and used to communicate DCI and so on, like the PDCCH. HARQ retransmission command information (ACK/NACK) in response to the PUSCH can be communicated by using at least one of the PHICH, the PDCCH and the EPDCCH.

UL channels that are used in the radio communication system 1 include UL data channels that are shared by each user terminal 20 (also referred to as "PUSCH (Physical Uplink Shared CHannel)," "UL shared channel," "sPUSCH," "1-ms PUSCH," etc.), a UL control channel (also referred to as "PUCCH (Physical Uplink Control CHannel)," "sPUCCH," "1-ms PUCCH," etc.), a random access channel (PRACH (Physical Random Access CHannel)) and so forth. User data, higher layer control information and so on are communicated by the PUSCH. Uplink control information (UCI), including at least one of retransmission command information (ACK/NACK), channel state information (CSI) and so on is communicated in the PUSCH or the PUCCH. By means of the PRACH, random access preambles for establishing connections with cells are communicated.

### (Radio Base Station)

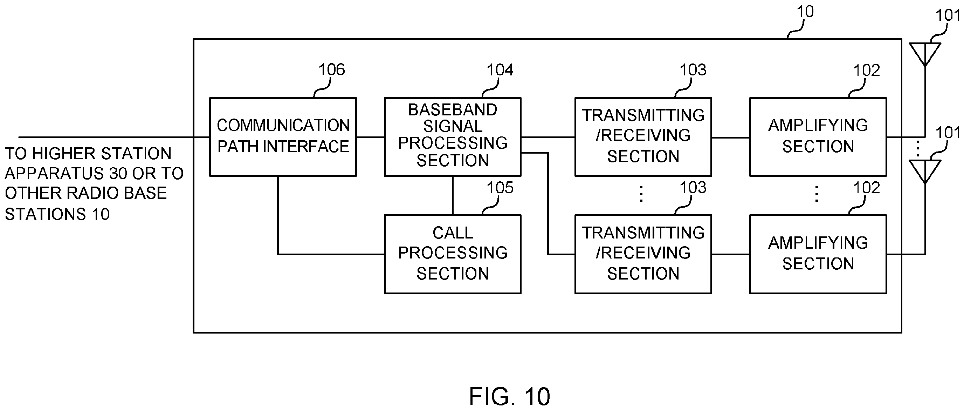

FIG. 10 is a diagram to show an exemplary overall structure of a radio base station according to the present embodiment. A radio base station 10 has a plurality of transmitting/receiving antennas 101, amplifying sections 102, transmitting/receiving sections 103, a baseband signal processing section 104, a call processing section 105 and a communication path interface 106. Note that one or more transmitting/receiving antennas 101, amplifying sections 102 and transmitting/receiving sections 103 may be provided.

User data to be transmitted from the radio base station 10 to a user terminal 20 is input from the higher station apparatus 30 to the baseband signal processing section 104, via the communication path interface 106.

In the baseband signal processing section 104, the user data is subjected to transmission processes, including a PDCP (Packet Data Convergence Protocol) layer process, division and coupling of the user data, RLC (Radio Link Control) layer transmission processes such as RLC retransmission control, MAC (Medium Access Control) retransmission control (for example, an HARQ (Hybrid Automatic Repeat reQuest) transmission process), scheduling, transport format selection, channel coding, an inverse fast Fourier transform (IFFT) process, a precoding process and so forth, and the result is forwarded to each transmitting/receiving section 103. Furthermore, downlink control signals are also subjected to transmission processes such as channel coding and an inverse fast Fourier transform, and forwarded to the transmitting/receiving sections 103.

Baseband signals that are precoded and output from the baseband signal processing section 104 on a per antenna basis are converted into a radio frequency band in the transmitting/receiving sections 103, and then transmitted. The radio frequency signals having been subjected to frequency conversion in the transmitting/receiving sections 103 are amplified in the amplifying sections 102, and transmitted from the transmitting/receiving antennas 101.

A transmitting/receiving section 103 can be constituted by a transmitters/receiver, a transmitting/receiving circuit or transmitting/receiving apparatus that can be described based on general understanding of the technical field to which the present invention pertains. Note that a transmitting/receiving section 103 may be designed as a transmitting/receiving section in one entity, or may be constituted by a transmitting section and a receiving section.

Meanwhile, as for UL signals, radio frequency signals that are received in the transmitting/receiving antennas 101 are amplified in the amplifying sections 102. The transmitting/receiving sections 103 receive the UL signals amplified in the amplifying sections 102. The received signals are converted into the baseband signal through frequency conversion in the transmitting/receiving sections 103 and output to the baseband signal processing section 104.

In the baseband signal processing section 104, UL data that is included in the UL signals that are input is subjected to a fast Fourier transform (FFT) process, an inverse discrete Fourier transform (IDFT) process, error correction decoding, a MAC retransmission control receiving process, and RLC layer and PDCP layer receiving processes, and forwarded to the higher station apparatus 30 via the communication path interface 106. The call processing section 105 performs call processing such as setting up and releasing communication channels, manages the state of the radio base station 10, manages the radio resources and so forth.

The communication path interface section 106 transmits and receives signals to and from the higher station apparatus 30 via a predetermined interface. Also, the communication path interface 106 may transmit and receive signals (backhaul signaling) with neighboring radio base stations 10 via an inter-base station interface (which is, for example, optical fiber in compliance with the CPRI (Common Public Radio Interface), the X2 interface, etc.).

In addition, the transmitting/receiving sections 103 transmit DL signals (for example, at least one of the PDSCH, the sPDSCH and DCI (including DCI for 1-ms TTIs (slow DCI), DCI for sTTIs (fast DCI), etc.)) and receives UL signals (for example, at least one of the PUSCH, the sPUSCH and UCI, in a subframe (a first TTI, a 1-ms TTI, a TTI longer than an sTTI, etc.) and/or in an sTTI (a second TTI).

Also, the transmitting/receiving sections 103 may transmit command information (the command information for 1-ms TTIs and the command information for sTTIs, which have been described earlier) related to DMRS sequence hopping in 1-ms TTIs and/or sTTIs.

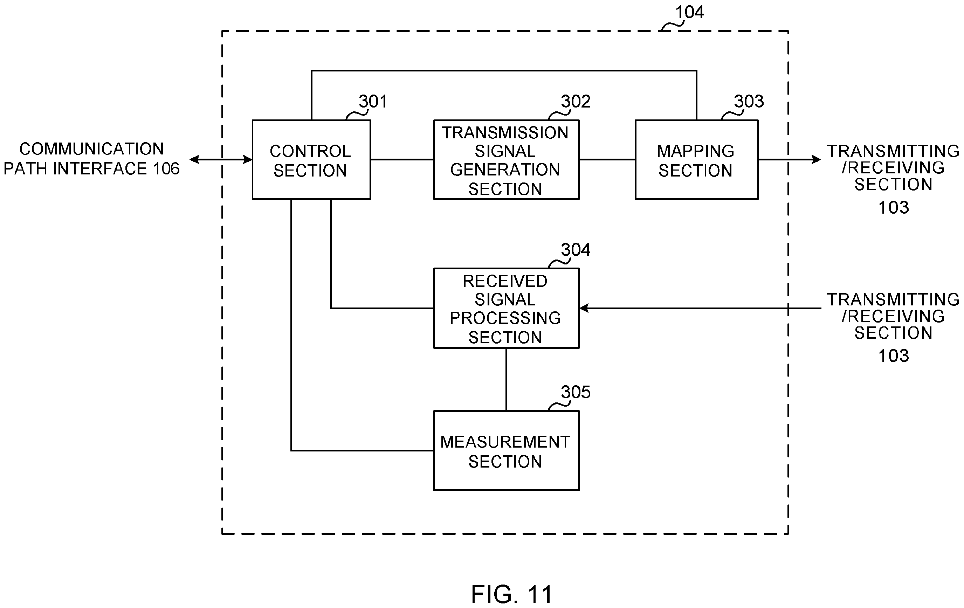

FIG. 11 is a diagram to show an exemplary functional structure of a radio base station according to the present embodiment. Note that, although FIG. 11 primarily shows functional blocks that pertain to characteristic parts of the present embodiment, the radio base station 10 has other functional blocks that are necessary for radio communication as well. As shown in FIG. 11, the baseband signal processing section 104 has a control section 301, a transmission signal generation section 302, a mapping section 303, a received signal processing section 304 and a measurement section 305.

The control section 301 controls the whole of the radio base station 10. The control section 301 controls, for example, generation of DL signals in the transmission signal generation section 302, mapping of DL signals in the mapping section 303, receiving processes (for example, demodulation) for UL signals in the received signal processing section 304, and measurements in the measurement section 305.

The control section 301 schedules DL data channels (including the PDSCH and the sPDSCH) and UL data channels (including the PUSCH and the sPUSCH) for user terminals 20.

In addition, the control section 301 exerts control so that DCI (DL assignments) to include DL data channel scheduling information, and/or DCI (UL grants) to include UL data channel scheduling information are mapped to candidate resources (including legacy PDCCH candidates and sPDCCH candidates) for DL control channels (including the legacy PDCCH and the sPDSCH), and transmitted.

Also, the control section 301 may also control the application of hopping (SGH and/or sequence hopping) to the base sequence of a DMRS for a UL channel in a 1-ms TTI and/or an sTTI. To be more specific, the control section 301 may decide whether to enable or disable the above hopping in a 1-ms TTI and/or an sTTI based on whether or not OCCs are applied to DMRSs in the 1-ms TTI and/or the sTTI.

Also, the control section 301 may control, based on the above decision, the generation and/or higher layer signaling-based transmission of command information for 1-ms TTIs, related to the above-mentioned hopping in a 1-ms TTI, and/or command information for sTTIs, related to the above-mentioned hopping in an sTTI (second enabling control, and first and second disabling control).

Also, the control section 301 may control, based on the above decision, the generation and/or transmission of DCI, which includes a predetermined field value that indicates whether the above-mentioned hopping is enabled or disabled in an sTTI (third enabling control, third disabling control). The DCI may be transmitted in a DL control channel in a 1-ms TTI, or may be transmitted in a DL control channel in an sTTI.

The control section 301 can be constituted by a controller, a control circuit or control apparatus that can be described based on general understanding of the technical field to which the present invention pertains.

The transmission signal generation section 302 generates DL signals (including DL data channels, DL control channels, DL reference signals and so on) based on commands from the control section 301, and outputs these signals to the mapping section 303. The transmission signal generation section 302 can be constituted by a signal generator, a signal generating circuit or signal generating apparatus that can be described based on general understanding of the technical field to which the present invention pertains.

The mapping section 303 maps the DL signal generated in the transmission signal generation section 302 to a radio resource, as commanded from the control section 301, and outputs this to the transmitting/receiving sections 203. The mapping section 303 can be constituted by a mapper, a mapping circuit or mapping apparatus that can be described based on general understanding of the technical field to which the present invention pertains.

The received signal processing section 304 performs receiving processes (for example, demapping, demodulation, decoding, etc.) for UL signals transmitted from the user terminals 20 (including, for example, UL data channels, UL control channels, UL control signals, etc.).

The measurement section 305 conducts measurements with respect to the received signal. The measurement section 305 can be constituted by a measurer, a measurement circuit or measurement apparatus that can be described based on general understanding of the technical field to which the present invention pertains.

### (User Terminal)

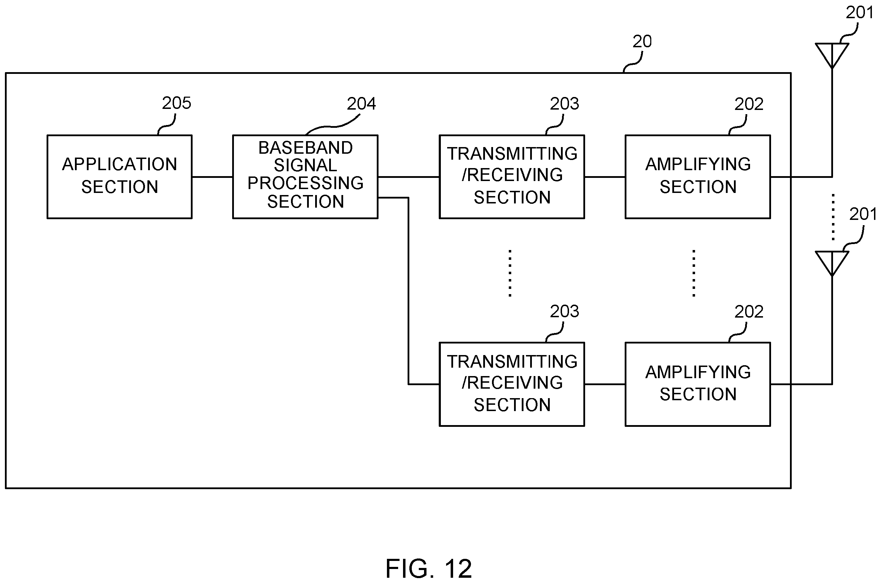

FIG. 12 is a diagram to show an exemplary overall structure of a user terminal according to the present embodiment. A user terminal 20 has a plurality of transmitting/receiving antennas 201 for MIMO communication, amplifying sections 202, transmitting/receiving sections 203, a baseband signal processing section 204 and an application section 205.

Radio frequency signals that are received in multiple transmitting/receiving antennas 201 are amplified in the amplifying sections 202. The transmitting/receiving sections 203 receive DL signals amplified in the amplifying sections 202. The received signals are subjected to frequency conversion and converted into the baseband signal in the transmitting/receiving sections 203, and output to the baseband signal processing section 204.

The baseband signal processing section 204 performs, for the baseband signal that is input, an FFT process, error correction decoding, retransmission control receiving processes, and so on. The DL data is forwarded to the application section 205. The application section 205 performs processes related to higher layers above the physical layer and the MAC layer, and so on. Also, the broadcast information is also forwarded to application section 205.

Meanwhile, UL data is input from the application section 205 to the baseband signal processing section 204. The baseband signal processing section 204 performs a retransmission control transmission process (for example, an HARQ transmission process), channel coding, rate matching, puncturing, a discrete Fourier transform (DFT) process, an IFFT process and so on, and the result is forwarded to each transmitting/receiving section 203. UCI (for example, DL retransmission control information, channel state information, etc.) is also subjected to channel encoding, rate matching, puncturing, a DFT process, an IFFT process and so on, and forwarded to each transmitting/receiving section 203.

Baseband signals that are output from the baseband signal processing section 204 are converted into a radio frequency band in the transmitting/receiving sections 203 and transmitted. The radio frequency signals that are subjected to frequency conversion in the transmitting/receiving sections 203 are amplified in the amplifying sections 202, and transmitted from the transmitting/receiving antennas 201.

In addition, the transmitting/receiving sections 203 receive DL signals (for example, at least one of the PDSCH, the sPDSCH and DCI (including fast DCI, slow DCI and the like)), and transmit UL signals (for example, at least one of the PUSCH, the sPUSCH and UCI) in a subframe (a first TTI, a 1-ms TTI, a TTI longer than an sTTI, etc.) and/or in an sTTI (a second TTI).

Also, the transmitting/receiving sections 203 may receive command information (the command information for 1-ms TTIs and the command information for sTTIs, which have been described earlier) related to DMRS sequence hopping in 1-ms TTIs and/or sTTIs.

A transmitting/receiving section 203 can be constituted by a transmitter/receiver, a transmitting/receiving circuit or transmitting/receiving apparatus that can be described based on general understanding of the technical field to which the present invention pertains. Furthermore, a transmitting/receiving section 203 may be structured as 1 transmitting/receiving section, or may be formed with a transmitting section and a receiving section.

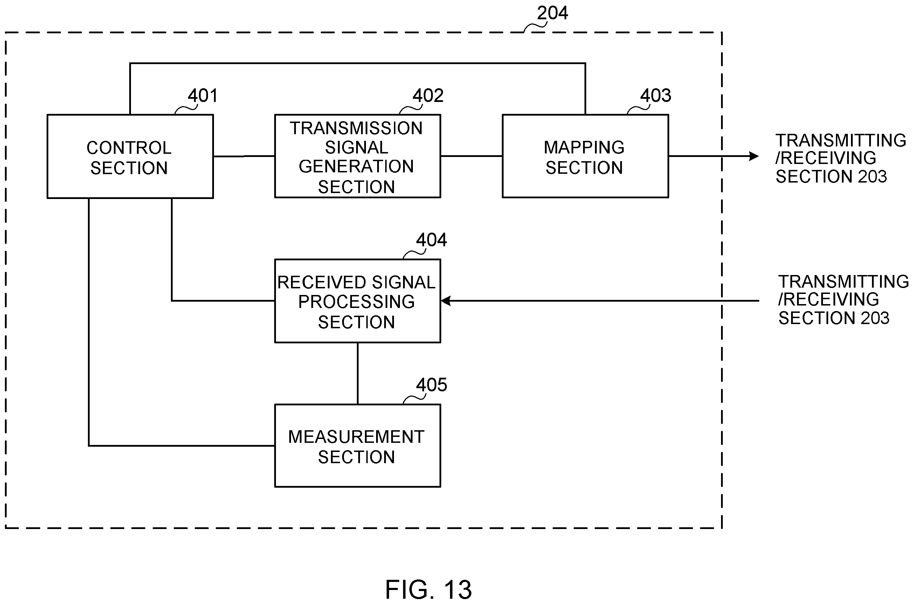

FIG. 13 is a diagram to show an exemplary functional structure of a user terminal according to the present embodiment. Note that, although FIG. 13 primarily shows functional blocks that pertain to characteristic parts of the present embodiment, the user terminal 20 has other functional blocks that are necessary for radio communication as well. As shown in FIG. 13, the baseband signal processing section 204 provided in the user terminal 20 has a control section 401, a transmission signal generation section 402, a mapping section 403, a received signal processing section 404 and a measurement section 405.

The control section 401 controls the whole of the user terminal 20. The control section 401 controls, for example, generation of UL signals in the transmission signal generation section 402, mapping of UL signals in the mapping section 403, DL signal receiving processes in the received signal processing section 404, measurements in the measurement section 405, and so forth.

The control section 401 controls receipt of DL data channels (including the PDSCH, the sPDSCH, etc.) and transmission of UL data channels (including the PUSCH, the sPUSCH, etc.) based on DCI (DL assignments and/or UL grants) addressed to the user terminal 20.

Also, the control section 401 may control the application of hopping (SGH and/or sequence hopping) to the base sequence of a DMRS (DMRS sequence) for a UL channel in a 1-ms TTI and/or an sTTI. To be more specific, the control section 401 may control the above-mentioned hopping in an 1-ms TTI based on command information for 1-ms TTIs transmitted by higher layer signaling.

A user terminal may autonomously control whether to enable or disable the above-mentioned hopping in an sTTI based on whether or not an OCC is applied to the DMRS in the sTTI. For example, when an OCC is not applied to a DMRS in an sTTI, the control section 401 may enable the above-mentioned hopping in that sTTI (first enabling control). Also, when an OCC is applied to a DMRS in an sTTI, the control section 401 may disable the above-mentioned hopping in that sTTI.

Also, the control section 401 may control whether to enable or disable the above-described hopping in an sTTI based on control information (command information for 1-ms TTIs or command information for sTTIs) reported from the radio base station 10 by higher layer signaling (second enabling control, first and second disabling control).

Also, the control section 401 may control whether to enable or disable the above-described hopping in an sTTI based on control information (the value of a predetermined field in DCI) reported from the radio base station 10 by L1 signaling (third enabling control and third disabling control). The DCI may be transmitted in a DL control channel in a 1-ms TTI, or may be transmitted in a DL control channel in an sTTI.

Also, the control section 401 may control the generation and/or transmission of a DMRS for a UL channel. To be more specific, the control section 401 may determine the DMRS sequence to be used in each sTTI, based on whether or not the above hopping is enabled. For example, when the above hopping is enabled, the control section 401 may select the DMRS sequence in each sTTI based on predetermined hopping patterns and/or a sequence shift patterns. The control section 401 may also control the generation of DMRSs using CSs and/or OCCs.

The control section 401 can be constituted by a controller, a control circuit or control apparatus that can be described based on general understanding of the technical field to which the present invention pertains.

The transmission signal generation section 402 generates UL signals (including performing encoding, rate matching, puncturing, modulation and/or other processes) as commanded from the control section 401, and outputs these to the mapping section 403. The transmission signal generation section 402 can be constituted by a signal generator, a signal generating circuit or signal generating apparatus that can be described based on general understanding of the technical field to which the present invention pertains.

The mapping section 403 maps the DL signals generated in the transmission signal generation section 402 to radio resources, as commanded from the control section 401, and outputs these to the transmitting/receiving sections 203. The mapping section 403 can be constituted by a mapper, a mapping circuit or mapping apparatus that can be described based on general understanding of the technical field to which the present invention pertains.

The received signal processing section 404 performs receiving processes for DL signals (for example, demapping, demodulation, decoding, etc.). The received signal processing section 404 outputs the information received from the radio base station 10, to the control section 401. The received signal processing section 404 outputs, for example, broadcast information, system information, high layer control information related to higher layer signaling such as RRC signaling, physical layer control information (L1/L2 control information) and so on, to the control section 401.

The received signal processing section 404 can be constituted by a signal processor, a signal processing circuit or signal processing apparatus that can be described based on general understanding of the technical field to which the present invention pertains. Also, the received signal processing section 404 can constitute the receiving section according to the present invention.

The measurement section 405 measures channel states based on reference signals (for example, CSI-RS) from the radio base station 10, and outputs the measurement results to the control section 401. Note that channel state measurements may be conducted per CC.

The measurement section 405 can be constituted by a signal processor, a signal processing circuit or signal processing apparatus, and a measurer, a measurement circuit or measurement apparatus that can be described based on general understanding of the technical field to which the present invention pertains.

### (Hardware Structure)

Note that the block diagrams that have been used to describe the above embodiments show blocks in functional units. These functional blocks (components) may be implemented in arbitrary combinations of hardware and/or software. Also, the means for implementing each functional block is not particularly limited. That is, each functional block may be realized by one piece of apparatus that is physically and/or logically aggregated, or may be realized by directly and/or indirectly connecting two or more physically and/or logically separate pieces of apparatus (via wire and/or wireless, for example) and using these multiple pieces of apparatus.

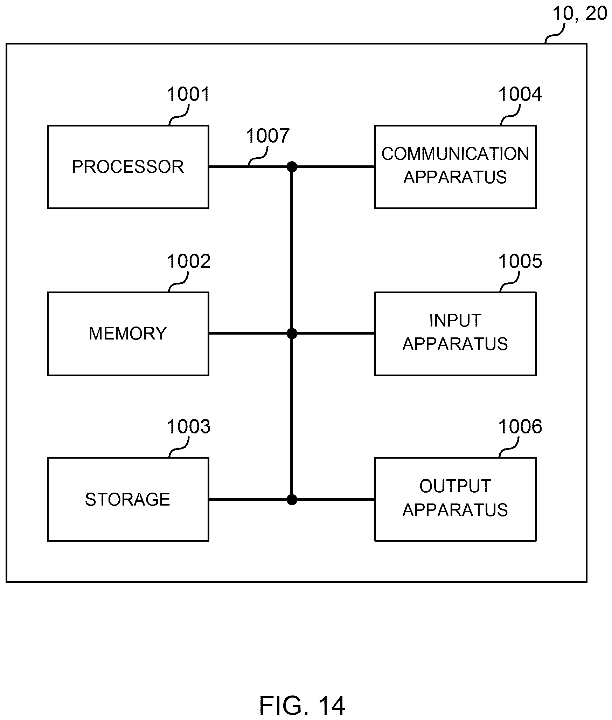

For example, the radio base stations, user terminals and so on according to the herein-contained embodiments of the present invention may function as a computer that executes the processes of the radio communication method of the present invention. FIG. 14 is a diagram to show an exemplary hardware structure of a radio base station and a user terminal according to one embodiment of the present invention. Physically, the above-described radio base stations 10 and user terminals 20 may be formed as a computer apparatus that includes a processor 1001, a memory 1002, a storage 1003, communication apparatus 1004, input apparatus 1005, output apparatus 1006 and a bus 1007.

Note that, in the following description, the word "apparatus" may be replaced by "circuit," "device," "unit" and so on. Note that the hardware structure of a radio base station 10 and a user terminal 20 may be designed to include one or more of each apparatus shown in the drawings, or may be designed not to include part of the apparatus.

For example, although only 1 processor 1001 is shown, a plurality of processors may be provided. Furthermore, processes may be implemented with 1 processor, or processes may be implemented in sequence, or in different manners, on one or more processors. Note that the processor 1001 may be implemented with one or more chips.

The functions of the radio base station 10 and the user terminal 20 are implemented by allowing hardware such as the processor 1001 and the memory 1002 to read predetermined software (programs), thereby allowing the processor 1001 to do calculations, controlling the communication apparatus 1004 to communicate, and controlling the memory 1002 and the storage 1003 to read and/or write data.

The processor 1001 may control the whole computer by, for example, running an operating system. The processor 1001 may be configured with a central processing unit (CPU), which includes interfaces with peripheral apparatus, control apparatus, computing apparatus, a register and so on. For example, the above-described baseband signal processing section 104 (204), call processing section 105 and others may be implemented by the processor 1001.

Furthermore, the processor 1001 reads programs (program codes), software modules, data and so forth from the storage 1003 and/or the communication apparatus 1004, into the memory 1002, and executes various processes according to these. As for the programs, programs to allow computers to execute at least part of the operations of the above-described embodiments may be used. For example, the control section 401 of the user terminals 20 may be implemented by control programs that are stored in the memory 1002 and that operate on the processor 1001, and other functional blocks may be implemented likewise.

The memory 1002 is a computer-readable recording medium, and may be constituted by, for example, at least one of a ROM (Read Only Memory), an EPROM (Erasable Programmable ROM), an EEPROM (Electrically EPROM), a RAM (Random Access Memory) and/or other appropriate storage media. The memory 1002 may be referred to as a "register," a "cache," a "main memory (primary storage apparatus)" and so on. The memory 1002 can store executable programs (program codes), software modules and so on for implementing the radio communication methods according to embodiments of the present invention.

The storage 1003 is a computer-readable recording medium, and may be constituted by, for example, at least one of a flexible disk, a floppy (registered trademark) disk, a magneto-optical disk (for example, a compact disc (CD-ROM (Compact Disc ROM) and so on), a digital versatile disc, a Blu-ray (registered trademark) disk), a removable disk, a hard disk drive, a smart card, a flash memory device (for example, a card, a stick, a key drive, etc.), a magnetic stripe, a database, a server, and/or other appropriate storage media. The storage 1003 may be referred to as "secondary storage apparatus."

The communication apparatus 1004 is hardware (transmitting/receiving device) for allowing inter-computer communication by using wired and/or wireless networks, and may be referred to as, for example, a "network device," a "network controller," a "network card," a "communication module" and so on. The communication apparatus 1004 may be configured to include a high frequency switch, a duplexer, a filter, a frequency synthesizer and so on in order to realize, for example, frequency division duplex (FDD) and/or time division duplex (TDD). For example, the above-described transmitting/receiving antennas 101 (201), amplifying sections 102 (202), transmitting/receiving sections 103 (203), communication path interface 106 and so on may be implemented by the communication apparatus 1004.

The input apparatus 1005 is an input device for receiving input from the outside (for example, a keyboard, a mouse, a microphone, a switch, a button, a sensor and so on). The output apparatus 1006 is an output device for allowing sending output to the outside (for example, a display, a speaker, an LED (Light Emitting Diode) lamp and so on). Note that the input apparatus 1005 and the output apparatus 1006 may be provided in an integrated structure (for example, a touch panel).

Furthermore, these pieces of apparatus, including the processor 1001, the memory 1002 and so on are connected by the bus 1007 so as to communicate information. The bus 1007 may be formed with a single bus, or may be formed with buses that vary between pieces of apparatus.

Also, the radio base station 10 and the user terminal 20 may be structured to include hardware such as a microprocessor, a digital signal processor (DSP), an ASIC (Application-Specific Integrated Circuit), a PLD (Programmable Logic Device), an FPGA (Field Programmable Gate Array) and so on, and part or all of the functional blocks may be implemented by the hardware. For example, the processor 1001 may be implemented with at least one of these pieces of hardware.

### (Variations)

Note that the terminology used in this specification and the terminology that is needed to understand this specification may be replaced by other terms that convey the same or similar meanings. For example, "channels" and/or "symbols" may be replaced by "signals" (or "signaling"). Also, "signals" may be "messages." A reference signal may be abbreviated as an "RS," and may be referred to as a "pilot," a "pilot signal" and so on, depending on which standard applies. Furthermore, a "component carrier (CC)" may be referred to as a "cell," a "frequency carrier," a "carrier frequency" and so on.

Furthermore, a radio frame may be formed with one or more periods (frames) in the time domain. Each of one or more periods (frames) constituting a radio frame may be referred to as a "subframe." Furthermore, a subframe may be formed with one or more slots in the time domain. A subframe may be a fixed time length (for example, 1 ms) not dependent on the numerology.

A slot may be formed with one or more symbols in the time domain (OFDM (Orthogonal Frequency Division Multiplexing) symbols, SC-FDMA (Single-Carrier Frequency Division Multiple Access) symbols, and so on). Also, a slot may be a time unit based on numerology. Also, a slot may include a plurality of mini-slots. Each mini-slot may be formed with 1 or more symbols in the time domain. Also, a mini-slot may be referred to as a "subslot."

A radio frame, a subframe, a slot, a mini-slot and a symbol all represent the time unit in signal communication. A radio frame, a subframe, a slot, a mini-slot and a symbol may be each called by other applicable names. For example, 1 subframe may be referred to as a "transmission time interval (TTI)," or a plurality of consecutive subframes may be referred to as a "TTI," or 1 slot or mini-slot may be referred to as a "TTI." That is, a subframe and/or a TTI may be a subframe (1 ms) in existing LTE, may be a shorter period than 1 ms (for example, 1 to 13 symbols), or may be a longer period of time than 1 ms. Note that the unit to represent a TTI may be referred to as a "slot," a "mini-slot" and so on, instead of a "subframe."

Here, a TTI refers to the minimum time unit of scheduling in radio communication, for example. For example, in LTE systems, a radio base station schedules the radio resources (such as the frequency bandwidth and/or the transmission power that can be used in each user terminal) to allocate to each user terminal in TTI units. Note that the definition of TTIs is not limited to this.

The TTI may be the transmission time unit of channel-encoded data packets (transport blocks), code blocks and/or codewords, or may be the unit of processing in scheduling, link adaptation and so on. Note that, when a TTI is given, the period of time (for example, the number of symbols) in which transport blocks, code blocks and/or codewords are actually mapped may be shorter than the TTI.

Note that, when 1 slot or 1 mini-slot is referred to as a "TTI," one or more TTIs (that is, one or multiple slots or one or more mini-slots) may be the minimum time unit of scheduling. Also, the number of slots (the number of mini-slots) to constitute this minimum time unit of scheduling may be controlled.

A TTI having a time length of 1 ms may be referred to as a "subframe," a "normal TTI (TTI in LTE Rel. 8 to 12)," a "long TTI," a "normal subframe," a "long subframe," and so on. A TTI that is shorter than a normal TTI may be referred to as an "sTTI," a "shortened TTI," a "short TTI," a "partial TTI (or a "fractional TTI")," a "shortened subframe," a "short subframe," a "mini-slot," a "sub-slot," and so on.

Note that a long TTI (for example, a normal TTI, a subframe, etc.) may be replaced with a TTI having a time length over 1 ms or a TTI that is longer than a short TTI, and a short TTI (for example, a shortened TTI) may be replaced with a TTI having a TTI length less than the TTI length of a long TTI and more than or equal to 1 ms.

A resource block (RB) is the unit of resource allocation in the time domain and the frequency domain, and may include one or a plurality of consecutive subcarriers in the frequency domain. Also, an RB may include one or more symbols in the time domain, and may be 1 slot, 1 mini-slot, 1 subframe or 1 TTI in length. 1 TTI and 1 subframe each may be formed with one or more resource blocks. Note that one or more RBs may be referred to as a "physical resource block (PRB (Physical RB))," a "subcarrier group (SCG)," a "resource element group (REG)," a "PRB pair," an "RB pair" and so on.

Furthermore, a resource block may be formed with one or more resource elements (REs). For example, 1 RE may be a radio resource field of 1 subcarrier and 1 symbol.

Note that the structures of radio frames, subframes, slots, mini-slots, symbols and so on described above are merely examples. For example, configurations pertaining to the number of subframes included in a radio frame, the number of slots included in a subframe or a radio frame, the number of mini-slots included in a slot, the number of RBs included in a slot or a mini-slot, the number of subcarriers included in an RB, the number of symbols in a TTI, the duration of symbols, the duration of cyclic prefixes (CPs) and so on can be changed in a variety of ways.

Also, the information and parameters described in this specification may be represented in absolute values or in relative values with respect to predetermined values, or may be represented in other information formats. For example, radio resources may be specified by predetermined indices. In addition, equations to use these parameters and so on may be used, apart from those explicitly disclosed in this specification.

The names used for parameters and so on in this specification are in no respect limiting. For example, since various channels (PUCCH (Physical Uplink Control CHannel), PDCCH (Physical Downlink Control CHannel) and so on) and information elements can be identified by any suitable names, the various names assigned to these individual channels and information elements are in no respect limiting.

The information, signals and/or others described in this specification may be represented by using a variety of different technologies. For example, data, instructions, commands, information, signals, bits, symbols and chips, all of which may be referenced throughout the herein-contained description, may be represented by voltages, currents, electromagnetic waves, magnetic fields or particles, optical fields or photons, or any combination of these.

Also, information, signals and so on can be output from higher layers to lower layers and/or from lower layers to higher layers. Information, signals and so on may be input and/or output via a plurality of network nodes.

The information, signals and so on that are input and/or output may be stored in a specific location (for example, a memory), or may be managed using a management table. The information, signals and so on to be input and/or output can be overwritten, updated or appended. The information, signals and so on that are output may be deleted. The information, signals and so on that are input may be transmitted to other pieces of apparatus.

Reporting of information is by no means limited to the examples/embodiments described in this specification, and other methods may be used as well. For example, reporting of information may be implemented by using physical layer signaling (for example, downlink control information (DCI), uplink control information (UCI), higher layer signaling (for example, RRC (Radio Resource Control) signaling, broadcast information (the master information block (MIB), system information blocks (SIBs) and so on), MAC (Medium Access Control) signaling and so on), and other signals and/or combinations of these.

Note that physical layer signaling may be referred to as "L1/L2 (Layer 1/Layer 2) control information (L1/L2 control signals)," "L1 control information (LI control signal)" and so on. Also, RRC signaling may be referred to as "RRC messages," and can be, for example, an RRC connection setup message, RRC connection reconfiguration message, and so on. Also, MAC signaling may be reported using, for example, MAC control elements (MAC CEs (Control Elements)).

Also, reporting of predetermined information (for example, reporting of information to the effect that "X holds") does not necessarily have to be sent explicitly, and can be sent implicitly (by, for example, not reporting this piece of information, or by reporting a different piece of information).

Decisions may be made in values represented by 1 bit (0 or 1), may be made in Boolean values that represent true or false, or may be made by comparing numerical values (for example, comparison against a predetermined value).

Software, whether referred to as "software," "firmware," "middleware," "microcode" or "hardware description language," or called by other names, should be interpreted broadly, to mean instructions, instruction sets, code, code segments, program codes, programs, subprograms, software modules, applications, software applications, software packages, routines, subroutines, objects, executable files, execution threads, procedures, functions and so on.

Also, software, commands, information and so on may be transmitted and received via communication media. For example, when software is transmitted from a website, a server or other remote sources by using wired technologies (coaxial cables, optical fiber cables, twisted-pair cables, digital subscriber lines (DSL) and so on) and/or wireless technologies (infrared radiation, microwaves and so on), these wired technologies and/or wireless technologies are also included in the definition of communication media.

The terms "system" and "network" as used herein are used interchangeably.

As used herein, the terms "base station (BS)," "radio base station," "eNB," "gNB," "cell," "sector," "cell group," "carrier," and "component carrier" may be used interchangeably. A base station may be referred to as a "fixed station," "NodeB," "eNodeB (eNB)," "access point," "transmission point," "receiving point," "femto cell," "small cell" and so on.

A base station can accommodate one or more (for example, 3) cells (also referred to as "sectors"). When a base station accommodates a plurality of cells, the entire coverage area of the base station can be partitioned into multiple smaller areas, and each smaller area can provide communication services through base station subsystems (for example, indoor small base stations (RRHs (Remote Radio Heads))). The term "cell" or "sector" refers to part or all of the coverage area of a base station and/or a base station subsystem that provides communication services within this coverage.

As used herein, the terms "mobile station (MS)" "user terminal," "user equipment (UE)" and "terminal" may be used interchangeably. A base station may be referred to as a "fixed station," "NodeB," "eNodeB (eNB)," "access point," "transmission point," "receiving point," "femto cell," "small cell" and so on.

A mobile station may also be referred to as, for example, a "subscriber station," a "mobile unit," a "subscriber unit," a "wireless unit," a "remote unit," a "mobile device," a "wireless device," a "wireless communication device," a "remote device," a "mobile subscriber station," an "access terminal," a "mobile terminal," a "wireless terminal," a "remote terminal," a "handset," a "user agent," a "mobile client," a "client" or some other suitable terms.

Furthermore, the radio base stations in this specification may be interpreted as user terminals. For example, each aspect/embodiment of the present invention may be applied to a configuration in which communication between a radio base station and a user terminal is replaced with communication among a plurality of user terminals (D2D (Device-to-Device)). In this case, user terminals 20 may have the functions of the radio base stations 10 described above. In addition, terms such as "uplink" and "downlink" may be interpreted as "side." For example, an "uplink channel" may be interpreted as a "side channel."

Likewise, the user terminals in this specification may be interpreted as radio base stations. In this case, the radio base stations 10 may have the functions of the user terminals 20 described above.

Certain actions which have been described in this specification to be performed by base stations may, in some cases, be performed by higher nodes (upper nodes). In a network formed with one or more network nodes with base stations, it is clear that various operations that are performed to communicate with terminals can be performed by base stations, one or more network nodes (for example, MMEs (Mobility Management Entities), S-GW (Serving-Gateways), and so on may be possible, but these are not limiting) other than base stations, or combinations of these.

The examples/embodiments illustrated in this specification may be used individually or in combinations, which may be switched depending on the mode of implementation. The order of processes, sequences, flowcharts and so on that have been used to describe the examples/embodiments herein may be re-ordered as long as inconsistencies do not arise. For example, although various methods have been illustrated in this specification with various components of steps in exemplary orders, the specific orders that are illustrated herein are by no means limiting.

The aspects/embodiments illustrated in this specification may be applied to systems that use LTE (Long Term Evolution), LTE-A (LTE-Advanced), LTE-B (LTE-Beyond), SUPER 3G, IMT-Advanced, 4G (4th generation mobile communication system), 5G (5th generation mobile communication system), FRA (Future Radio Access), New-RAT (Radio Access Technology), NR(New Radio), NX (New radio access), FX (Future generation radio access), GSM (registered trademark) (Global System for Mobile communications), CDMA 2000, UMB (Ultra Mobile Broadband), IEEE 802.11 (Wi-Fi (registered trademark)), IEEE 802.16 (WiMAX (registered trademark)), IEEE 802.20, UWB (Ultra-WideBand), Bluetooth (registered trademark) and other adequate radio communication methods, and/or next-generation systems that are enhanced based on these.

The phrase "based on" as used in this specification does not mean "based only on," unless otherwise specified. In other words, the phrase "based on" means both "based only on" and "based at least on."

Reference to elements with designations such as "first," "second" and so on as used herein does not generally limit the number/quantity or order of these elements. These designations are used herein only for convenience, as a method of distinguishing between two or more elements. In this way, reference to the first and second elements does not imply that only 2 elements may be employed, or that the first element must precede the second element in some way.

The terms "judge" and "determine" as used herein may encompass a wide variety of actions. For example, to "judge" and "determine" as used herein may be interpreted to mean making judgements and determinations related to calculating, computing, processing, deriving, investigating, looking up (for example, searching a table, a database or some other data structure), ascertaining and so on. Furthermore, to "judge" and "determine" as used herein may be interpreted to mean making judgements and determinations related to receiving (for example, receiving information), transmitting (for example, transmitting information), inputting, outputting, accessing (for example, accessing data in a memory) and so on. In addition, to "judge" and "determine" as used herein may be interpreted to mean making judgements and determinations related to resolving, selecting, choosing, establishing, comparing and so on. In other words, to "judge" and "determine" as used herein may be interpreted to mean making judgements and determinations related to some action.

As used herein, the terms "connected" and "coupled," or any variation of these terms, mean all direct or indirect connections or coupling between two or more elements, and may include the presence of one or more intermediate elements between 2 elements that are "connected" or "coupled" to each other. The coupling or connection between the elements may be physical, logical or a combination thereof. For example, "connection" may be interpreted as "access." As used herein, 2 elements may be considered "connected" or "coupled" to each other by using one or more electrical wires, cables and/or printed electrical connections, and, as a number of non-limiting and non-inclusive examples, by using electromagnetic energy having wavelengths in radio frequency fields, microwave regions and optical (both visible and invisible) regions.

When terms such as "include," "comprise" and variations of these are used in this specification or in claims, these terms are intended to be inclusive, in a manner similar to the way the term "provide" is used. Furthermore, the term "or" as used in this specification or in claims is intended to be not an exclusive disjunction.

Now, although the present invention has been described in detail above, it should be obvious to a person skilled in the art that the present invention is by no means limited to the embodiments described herein. The present invention can be implemented with various corrections and in various modifications, without departing from the spirit and scope of the present invention defined by the recitations of claims. Consequently, the description herein is provided only for the purpose of explaining examples, and should by no means be construed to limit the present invention in any way.

## Claims

1. A user terminal comprising:
a transmission section that transmits a demodulation reference signal for an uplink (UL) channel in a second transmission time interval (TTI) that is shorter than a first TTI; and
a control section that controls enabling or disabling hopping of a base sequence for the demodulation reference signal based on whether or not an orthogonal cover code (OCC) is applied to the demodulation reference signal.

2. The user terminal according to claim 1, wherein, when the OCC is applied to the demodulation reference signal, the control section disables the hopping without command information by higher layer signaling and/or downlink control information.

3. The user terminal according to claim 1, wherein, when the OCC is applied to the demodulation reference signal, the control section disables the hopping based on command information by higher layer signaling and/or downlink control information.

4. The user terminal according to one of claims 1 to 3, wherein, when the OCC is not applied to the demodulation reference signal, the control section enables the hopping based on command information by higher layer signaling and/or downlink control information.

5. The user terminal according to one of claim 1 to claim 4, wherein the hopping is hopping of a group number of the base sequence and/or hopping of a base sequence number of the base sequence.

6. A radio communication method in a user terminal, comprising the steps of:
transmitting a demodulation reference signal for an uplink (UL) channel in a second transmission time interval (TTI) that is shorter than a first TTI; and
controlling enabling or disabling hopping of a base sequence for the demodulation reference signal based on whether or not an orthogonal cover code (OCC) is applied to the demodulation reference signal.
